(19) Europäisches Patentamt
European Patent Office
Office européen des brevets

(11) **EP 4 560 499 A1**

(12) **EUROPEAN PATENT APPLICATION**

(43) Date of publication:
**28.05.2025 Bulletin 2025/22**

(21) Application number: **23383188.2**

(22) Date of filing: **21.11.2023**

(51) International Patent Classification (IPC):
**G06F 18/25** (2023.01)    **G06F 18/27** (2023.01)
**G06N 3/045** (2023.01)    **G06V 10/80** (2022.01)
**G06V 40/16** (2022.01)

(52) Cooperative Patent Classification (CPC):
**G06V 40/178; G06F 18/256; G06F 18/27;
G06N 3/045; G06V 10/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Panacea Cooperative Research S. Coop.**
**24402 Ponferrada (León) (ES)**
• **Universidad de Granada**
**18071 Granada (ES)**
• **Universidade Da Coruña**
**15001 A Coruña (ES)**

(72) Inventors:
• **VENEMA RODRÍGUEZ, Javier**
**18008 Granada (ES)**
• **DE LUCA, Stefano**
**28047 Madrid (ES)**
• **SUÁREZ ULLOA, María Victoria**
**15660 Cambre (A Coruña) (ES)**
• **MESEJO SANTIAGO, Pablo**
**18015 Granada (ES)**
• **GONZÁLEZ ROMERO, Rodrigo**
**15660 Cambre (A Coruña) (ES)**
• **IBÁÑEZ PANIZO, Óscar**
**15002 A Coruña (ES)**

(74) Representative: **TRBL Intellectual Property**
**Plaza de Castilla 3, 7°A**
**28046 Madrid (ES)**

(54) **AGE ESTIMATION METHOD AND SYSTEM BASED ON DATA AGGREGATION**

(57)    The present invention discloses a computer implemented method and a system for estimating the age of a living subject or the age at the time of death of a subject's corpse. Said method comprises providing a plurality of age estimation methods (1), classified into trainable (1') and non-trainable (1") methods, each of them associated with a type of data. The trainable methods (1') are trained independently using the corresponding types of training data (3), and, afterwards, one or more ensembles (5) are defined, each comprising a subset (6) of the trained methods (4). The one or more ensembles (5) are trained using a subset (7) of the training data (3) associated with the trained models (4) belonging to said ensemble/s (5), and, once they are trained, input data (2) of a subject is delivered to each of the trained models (4) that are not comprised in the ensemble/s (5), to each trained ensemble (8) and to each of the non-trainable estimation methods (1"), such that corresponding age estimates (9', 9, 9") are obtained. Finally, these estimates (9, 9', 9") are aggregated using one or more aggregation functions (10) and a final estimate (11) of the age of the subject is delivered.

FIG. 1

**Description**

**FIELD OF THE INVENTION**

The present invention belongs to the field of identifying the age of living persons and of corpses at the time of death by means of the application of computational techniques such as artificial intelligence, including machine learning and deep learning tools. More specifically, the present invention provides a method that allows for accurately estimating the age of a subject by aggregating computationally different estimates of said age obtained from different types of data belonging to said subject.

**BACKGROUND OF THE INVENTION**

Determining with precision the biological and the legal age of a person is of the utmost importance to solve adequately multiple, sometimes sensible, problems, such as the following:

- forensic problems related with the identification of living minors: mostly legal and social problems, including the assessment of migrants' cases, pedophilia cases, asylum rights, forced marriage, forced labor and crimes committed by the alleged minors, and others;
- forensic problems related with cadavers: these include the estimation of the age of a deceased person at the time of death, which may be relevant both legally and socially.
- sports-related problems: including the determination of whether a person is above the maximum age for participating in sporting competitions, the calculation of market values of a player/sportsperson, etc.;
- pediatric or medical problems: comparing the actual age of a person against the developmental age shown by their body (skeleton) may be key to identify medical issues or deficiencies; and

As stated, these issues are, in many cases, very delicate, since a misestimation of the corresponding age might lead to large economic losses, to the violation of human rights, to undue imprisonment or in the most extreme cases, to the death of the person involved. Thus, it is necessary to have adequate and accurate means to determine the age of a person or of a corpse at the time of death.

At present, the vast majority of age estimation techniques is based on the inspection and analysis of a single anatomic region of the target subject, mainly through medical images such as X-rays, computed axial tomography (CAT) scans or magnetic resonance imaging (MRI) in the case of living subjects, and the analysis of one bone in the case of deceased persons. There also exist techniques in which the age of the subject is estimated by analyzing 2D images, such as photographs of the face of the person, or photographs of a bone (the latter, for instance, in the case of the deceased), or by analyzing 3D images such as 3D models of the face or of a bone. None of these techniques involves, though, the simultaneous or combined use of different anatomic regions, different bones, or different types of images.

Recent developments regarding computational tools, like artificial intelligence, have improved the results of these techniques. However, even when performing machine learning or deep learning analyses of the corresponding images, in most cases, the accuracy with which the value of the age is estimated is still far from the required one in, for instance, legal procedures.

Furthermore, many available age estimation methods based on a single type of image (understood as images from the same anatomic region acquired through the same imaging technique) do not consider relevant information for the age estimation. Typically, if the sex of the subject is known, it is taken into account when obtaining the estimates, but many other important pieces of data or metadata, such as referred date of birth, racial group, country of origin, etc., are often ignored. One of the most significant of these pieces of data is that related to DNA methylation obtained from blood or saliva in the case of living persons, and from bones and/or teeth in the case of the deceased.

Although most known age estimation models are based on the use of a single anatomical region, there are some examples in the art where more than one anatomical region is used. For instance, in "*Age estimation based on 3D post-mortem computed tomography images of mandible and femur using convolutional neural networks*" by Pham C. V., et al. (2021), PLOS ONE 16(5): e0251388, the authors present a method for determining the age of a subject based on computed tomography (CT) images of the mandible and the femur in two different ways. The first one involves, after a preprocessing of the data, feeding the mandible data to a Convolutional Neural Network (CNN) and the femur data to another CNN to finally combine both results by averaging them. The second one consists of concatenating the characteristics of the two models into a single model to obtain the final estimation. In this case there is no previous training of each model before the concatenation. It is to be noted that in all cases, only one type of image (CT) is considered.

Another example, corresponding to D. Stern, C. el at., "Automatic Age Estimation and Majority Age Classification From Multi-Factorial MRI Data" in IEEE Journal of Biomedical and Health Informatics, vol. 23, no. 4, pp. 1392-1403, July 2019 also uses multiple anatomic regions to obtain age estimations. The authors tests three different strategies for MRI input images of different anatomic regions: 1. concatenating the input images directly, 2. establishing a network of networks in which the output of the convolutional blocks is concatenated and 3. establishing a network of networks in which the output of the convolutional blocks is concatenated after several fully connected layers. All these strategies reach a Mean Average Error (MAE) of around 1-1.2. In this work no previous training of each model with a single anatomic region is performed and only one type of image (MRI) is used.

Moreover, all methods proposed in the art based on the inspection or analysis of more than one anatomic region present further limitations. For instance, when applying these techniques, there is no correct treatment of missing values, i.e., there are no instructions regarding how to manage the situations in which a particular piece of data from a test subject is not available, when it is in principle necessary to be used as input for one of these methods. On the other hand, the already mentioned lack of use of relevant metadata also applies to these methods. Finally, the interconnection of the artificial intelligence techniques is not as efficient as it could be since no previous training of the separate models has been performed.

Another significant limitation of the available methods in the art relates to the training datasets used to train the different computational models involved in the age estimation. These datasets are often restricted and very biased, in the sense that they contain data from subjects belonging to a very similar population group. Thus, diversity and variability are not taken into account when obtaining the estimates, and, for determined subjects, large errors may be obtained.

Therefore, there is a need for a method suitable for estimating the age of a subject with high accuracy that allows for efficiently integrating all the relevant available information of a subject, i.e., a method capable of receiving multiple data from:

- a plurality of anatomic regions;
- a plurality of imaging types (medical, photographic, 3D models...);
- metadata including DNA methylation; and
- other possible relevant data;

in order to provide a trustworthy estimate of the age of said subject.

## SUMMARY OF THE INVENTION

To overcome the above limitations, the invention proposes a novel approach to obtain an accurate age estimate of a living person or of a deceased person (mainly skeletal remains but also CT scans or DNA from the subject, among others) at the time of death. The main advantage of the invention is that it aggregates efficiently many different pieces of data by relying on artificial intelligence techniques.

More specifically, and advantageously, a first object of the invention relates to a computer implemented method for estimating the age of a living subject or the age at the time of death of a subject's corpse (mainly skeletal remains). Said method can be understood as comprising three stages or levels: a first level of separated estimation methods or models, a second level involving an ensemble of a plurality of said models and a third level in which an aggregation of the different age estimates obtained with the models and with the ensemble is carried out to obtain a final estimate of the age of a subject.

Within the first level, the method of the invention comprises performing the following steps, in any possible technical order:

a) providing a plurality of estimation methods adapted to deliver an age estimation of a subject from input data of said subject;
b) classifying the plurality of estimation methods into a trainable subset comprising the trainable estimation methods and a non-trainable subset comprising the non-trainable estimation methods;
c) providing a training data set of a plurality of training subjects, said training data set being classified in a plurality of training data types for each training subject and wherein said training data comprises image and/or tabular training data indicative of the age of the plurality of the training subjects; and
d) training a machine learning model for each trainable estimation method comprised in the trainable subset, each of said trainable estimation methods corresponding to a type of training data classified in step c), and obtaining a plurality of trained models, wherein each of the trained models provides an estimate of the age of a subject based on the corresponding type of training data.

In this way, a set of trained models is obtained, each of them corresponding to a specific type of data. Furthermore, each of these models is trained in an optimized way, since all the available data corresponding to each type is used in the training of each model. This is advantageous because it is easier to provide a large amount of data and from multiple populations to train a model that works very well for that particular type of data, obtaining higher accuracies and a better generalization when training with more heterogeneous data as well as higher accuracies on populations that are not in the training set. In other words, there exist few data that contain different types for the same individual, and much more data if only one type is considered in each case. Thus, independent model training allows for accessing a much larger amount of training data.

Within the second level, the method of the invention comprises performing the following steps in any possible technical order:

e) defining one or more trained-model ensembles comprising a subset of the plurality of trained models obtained in step d); and

f) training each trained-model ensemble defined in step e) with a subset of the training data that correspond to the subset of the plurality of trained models comprised by said ensemble, obtaining a trained trained-model ensemble configured to provide an estimate of the age of a subject based on an optimized aggregation of the trained models comprised by said ensemble.

In general, and as stated, the ensemble/s will be trained with a subset of the training data that correspond to the subset of the plurality of trained models comprised by said ensemble/s. This way, the ensemble/s learn an aggregation of the characteristics extracted by the models comprised therein (or directly from the estimates they provide) as well as to efficiently combine the models that provide estimates based on different types of data. They also learn the correlations between each type of data and the age estimates obtained. All this translates into higher robustness of the method and higher accuracies of the age estimations.

Finally, within the third level, the method of the invention comprises performing the following steps in any possible technical order:

g) delivering input data of a test subject to each of the trained models obtained in step d) that are not comprised in the trained-model ensemble/s, to each trained trained-model ensemble obtained in step f) and to each of the non-trainable estimation methods, and obtaining an estimate of the age of the test subject with each of said trained models, with each of said trained ensembles and with each of said non-trainable estimation methods;

h) aggregating, using one or more aggregation functions, the estimates of the age of the test subject obtained in step g), obtaining a final estimate of the age of the test subject; and

i) delivering the final estimate of the age of the test subject.

This third level allows for using all the available relevant data for age estimation without the need to have training data that gather all the possible data that can be used for the same subject. This is also relevant since it allows to use all available data in each country/legislation/situation.

By implementing the method of the invention, therefore, very precise estimation of the age of a subject can be obtained by including all the available information regarding said subject, and not just different, independent characteristics.

In a preferred embodiment of the invention, the definition of the one or more trained-model ensembles in step e) comprises selecting a training data subset of the training data set, where the training data subset comprises training data from the plurality of training subjects which share the same data types, and defining a trained-model ensemble comprising a subset of the plurality of trained models obtained in step d) corresponding to the training data types comprised in the training data subset.

This is advantageous since, in many cases, it is not possible to get a dataset containing every relevant type of data in age estimation for the same individual. Models that estimate age from missing types of data could, in this scenario and in principle, not be included in the ensemble because it could not be trained.

Another way to deal with this issue is treating adequately the missing values in the training data. In fact, in another preferred embodiment of the invention, within the training data subset, one or more values of a training data type are treated as if they were missing for a training subject, and said missing value/s are replaced by:

- a black image if the missing value/s correspond to image training data; or
- an array of zeroes if the missing value/s correspond to tabular training data;

and wherein the ensemble comprising the models corresponding to said missing value/s is trained for each possible combination of training data types and missing values. With this procedure, all models learn how to manage data in which some values might be missing, enhancing the robustness of the method in the case in which input data exhibit some missing values at the estimation stage. If this was the case, the input missing data will be also replaced either by a black image or by an array of zeroes such that the trained ensemble would know how to manage that kind of information.

Another possibility regarding the definition of the ensembles is defining N ensembles, where N is the number of all possible combinations of one or more trained models, and wherein each of the N ensembles comprises a corresponding different combination of one or more trained models. This way, all possible estimates are obtained and evaluated in order to obtain a final, accurate age estimation.

In another preferred embodiment of the invention, the training data comprise 2D and/or 3D image data of a plurality of anatomic regions, face (direct, partially occluded, etc.) and/or one or more bones and/or medical image data comprising data obtained from a plurality of medical image acquisition devices and, optionally, macroscopic observations of the morphology of one or more anatomic regions; measurements performed on dry bones, teeth, and/or medical images of bones and teeth; and/or DNA methylation data.

In another preferred embodiment of the invention, before step h), the following step is carried out:
g') associating a predetermined weight to each estimate obtained in step g); and one or more of the aggregation functions used in step h) comprises said weights. A particular example of this kind of aggregation function would be a weighted average. The determination of the value of at least one of the weights may be based on data about the accuracy of each estimation method when estimating the age of a subject (both in the whole range of ages or in the specific range to which the age estimated by each estimation method belongs) or the performance of each estimation method and of the ensemble (both in the whole range of ages or in the specific range to which the age estimated by each estimation method belongs). Thus, in the above example, each age estimate would be associated with a weight according to one of these criteria, and then averaged together within a weighted average framework. If one or more of the estimates obtained to be aggregated is missing, no weights are associated to that missing estimate, and the weights associated to the non-missing estimate/s are adjusted proportionally so that they add up to one.

In another preferred embodiment of the invention each of the models trained in step d) with image training data comprises a trained artificial neural network (ANN) comprising, in turn, internal weights with a determined value.

Furthermore, each ensemble defined in step e) comprises an overall network of trained ANNs comprising, in turn, network weights, and each of the trained ANNs comprised by each overall network corresponds to a branch of said overall network. Within the overall network, zero or more final layers of each trained ANN are removed, in such a way that k features, with k > 0 being the number of neurons in the final layer of each of said trained ANNs, are outputted from each trained ANN. Besides, each overall network comprises an initial fully connected layer of k*x neurons, with x being the number of models comprised by the corresponding ensemble, that is inserted at the end of the branches of said overall network and is followed by a nonlinear function, 0 or more intermediate layers and a final layer comprising a single neuron with a linear activation function.

Within this configuration, the training of each ensemble in step f) is carried out in the following way:

- for each branch, an initial intermediate set of features comprising an estimation of the age of a subject is obtained by using the corresponding determined values of its internal weights (it is to be noted that, contrary to the state of the art, this is only possible since the models comprised by the ensemble have been previously trained independently, so an initial, well aimed, age estimate can be obtained with each of them);
- each initial intermediate set of features enters in the initial fully connected layer, and an output is obtained;
- the previous output is delivered to the next intermediate layer, obtaining a subsequent output;
- the previous step is repeated for each intermediate layer;
- a final intermediate output is delivered to the final layer and a combined estimate of the age of a subject corresponding to the estimate of the age of a subject of the corresponding ensemble is obtained;
- by comparing said combined estimate with the training data, the internal weights and the network weights are updated; and
- the training process is repeated iteratively until the corresponding ensemble is trained.

Additionally, each of the models trained in step d) with tabular training data may comprise a trained artificial neural network (ANN) comprising, in turn, internal weights with a determined value, and wherein each of said ANNs comprised by an ensemble correspond to a branch of said ensemble.

Alternatively, after the ensemble/s are trained, an estimate of the age of a subject may be obtained with each of said ensembles and with each of the models trained in step d) with tabular training data separately. Then, said estimates are concatenated into an age feature vector and said age feature vector is used as input to train a machine learning model adapted to provide a combined estimate of the age of a subject. This way, the cases in which tabular data are more efficiently treated with models which are incompatible with an ANN implementation (non-deep learning models), are taken into account in an adequate manner.

Regarding this alternative, a further embodiment corresponds to the case in which the machine learning model used for obtaining the estimates, and to which the age feature vector is inputted, is a Deep Random Neural Network (DRNN). In this scenario, instead of defining and training the ensemble/s before the delivery of input data it/they is/are defined and trained afterwards, using only the subset of training data and corresponding models for which the test individual whose age is being estimated has data. Therefore, a model is defined and trained each time test subject input data is received. This saves considerable amounts of computation time in terms of training, since these models have very reduced training times, so their use is well motivated as this reduction in training time offsets the time it takes for the model to produce the corresponding age estimate. The use of these models also implies memory savings, since no trained models or ensembles have to be stored for posterior uses.

In another preferred embodiment of the invention, before step d), the method comprises performing the step: c') providing associated metadata of the plurality of subjects, said metadata being classified in a plurality of metadata types for each training subject. These metadata may comprise at least one of the following types of data: legal, social, medical, genetic, family and developmental data.

Additionally, at least one of the following is carried out:

- step d) further comprises employing the metadata to optimize the training of one or more of the machine learning models thus optimizing the estimate of the age of a subject provided by said models;
- step f) further comprises employing the metadata to optimize the training of one or more of the ensembles thus optimizing the estimate of the age of a subject provided by said ensembles; and
- step g) further comprises delivering input metadata of a test subject to one or more trained models obtained in step d) and/or to one or more trained ensembles obtained in step f).

In this way, not only the data leading directly to an age estimation are taken into account, but another possibly relevant data. For instance, two individuals having the same age may show different levels of skeletal development depending on their socio-economic background. Even if the socio-economic background is not an indicative of the age of said individuals it might be key to determine accurately their age based on their skeleton information.

In another preferred embodiment of the invention, the metadata are introduced in the ensemble as an additional branch of the overall network of ANNs. This overall network comprises, thus, an additional branch corresponding to an ANN that receives the metadata as input, said ANN being a fully connected ANN in which the first layer has m neurons, with m being the number of metadata types, and said additional branch being followed by zero or more fully connected layers, where each fully connected layer adds a nonlinear activation function.

In another preferred embodiment of the invention, the input data that correspond to the subset of the plurality of trained models comprised by the ensemble/s are used as training data in the training of said ensemble/s. This allows for updating the trained ensemble with every new piece of data that is delivered to it.

A second object of the invention relates to a system comprising computing means equipped with hardware and/or software means adapted to perform a method according to any of the preferred embodiments described above.

Finally, a third object of the invention relates to a computer program comprising instructions which, when the program is executed by computing means, cause the computing means to carry out a method as described above in the different embodiments.

Within the scope of the invention, the term "type of data" shall be interpreted as any piece of data coming from different anatomical regions of a subject, different sets of anatomical features within the same anatomic region, different 2D and/or 3D images of a subject, DNA methylation data, morphometric data measured on bones, macroscopic observations and/or 3D models and/or 3D scans (of the face, of one or more bones, etc.). For instance, a radiography of the clavicle is to be considered as a different type of data than a radiography of the wrist bone. Similarly, an MRI of the mandible is to be considered as a different type of data than a CBTC of the mandible.

Also within the scope of the invention, the term "metadata" shall be interpreted as any piece of data from which a direct age estimation cannot be obtained (e.g., country of origin) but whose use as support information for an age estimation method may be relevant.

In summary, the proposed method allows for accurately estimating the age of a living persons or of a corpse at the time of death taking into account all the available data regarding the target subject. This novel approach implies that there is no need to forgo the learning of an aggregation when possible, since all useful data may be used in the estimation, even if there are no datasets that include them together with other data of interest. In addition, the method of the invention allows for accessing more data and for dealing with the problem of missing information.

## BRIEF DESCRIPTION OF DRAWINGS

Fig. 1 shows schematically the elements and steps of a method according to an embodiment of the invention.

Fig. 2 shows schematically the elements and steps of a method according to an embodiment of the invention in which training and input metadata are used in order to obtain an age estimate.

**NUMERIC REFERENCES USED IN THE DRAWINGS**

| | |
|---|---|
| 1 | Estimation methods |
| 1' | Trainable methods/models |
| 1" | Non-trainable methods |
| 2 | Input data (set) |
| 3 | Training data (set) |
| 4 | Trained models |
| 5 | Ensemble/s |
| 6 | Subset of trained models comprised by the ensemble/s |
| 7 | Training data subset |
| 8 | Trained ensemble |
| 9 | Age estimate/s from the ensemble/s |
| 9' | Age estimate/s from the models not comprised by the ensemble |
| 9" | Age estimate/s from the non-trainable methods |
| 10 | Aggregation function |
| 11 | Final estimate |
| 12 | Training metadata |
| 13 | Input metadata |

## DETAILED DESCRIPTION OF THE INVENTION

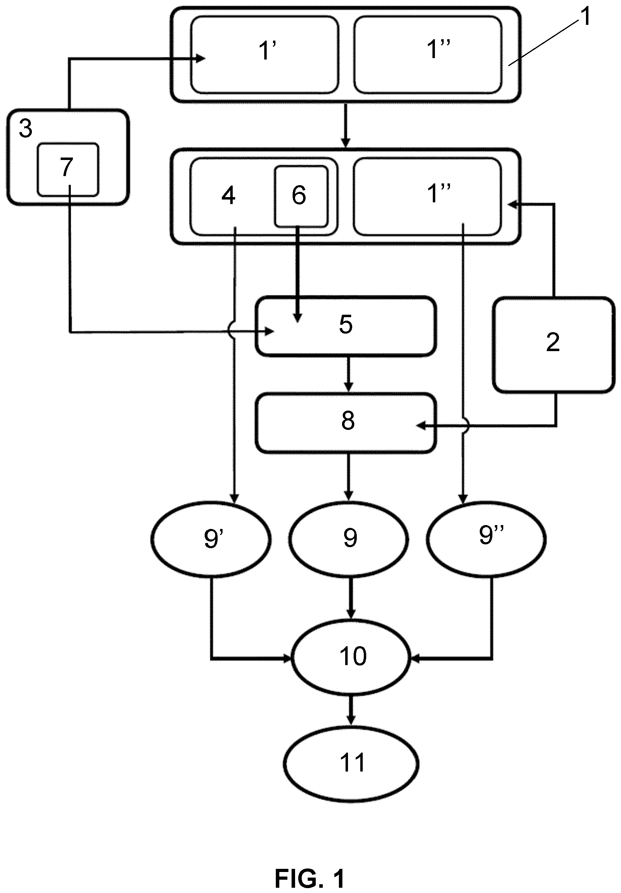

Some preferred embodiments of the invention, shown in Figs. 1-2, will be now described for illustrative, but not limiting purposes.

The method of the invention for estimating the age of a person (living or at the time of death) according to a preferred embodiment is schematically shown in Figure 1. In said Figure, read from top to bottom, the different elements and steps of said method are depicted. First, a plurality of age estimation methods (1) is selected. These may include trainable (1') (such as, for instance, machine learning and/or deep learning models) and non-trainable (1") (such as estimation equations, among others) methods, each adapted to provide an age estimation of a subject from one type of input data (2).

A key aspect of the method of the invention that allows for a very accurate age estimation is that different types of data are used and integrated together. These different types are to be understood as coming from:

- different anatomical regions of the subject, being the most usual ones the hand and wrist bones, teeth, clavicle, pelvis or hip bones, auricular surface and pubic symphysis, sacrum, skull and mandible, knee (femur, tibia and fibula), shoulder, elbow, femur, tibia, vertebrae, ribs, sternum and joint and musculoskeletal areas in general (e.g., analysis of entheseal changes);
- different sets of anatomical features within the same anatomic region;
- different 2D and/or 3D images of the subject such as photos (of the face, of the eyes, of a bone, of another part of the body, etc.), radiographs, CTs, MRIs, CBCTs (of the teeth, jaw, skull, etc.), OPTs;
- DNA methylation marker values;
- morphometric data measured on bones (euclidean, geodesic, area and/or volume measurements);
- macroscopic observations (characteristics/patterns observed by an expert); and
- 3D models and/or 3D scans (of the face, of one or more bones, etc.).

This list is non-exhaustive and other types of data may also be used for the age estimation. Furthermore, and in general, the different types of data may be categorized as image data or as tabular data.

For example, and for illustrative purposes, a possible set of input data (2) may include radiographies of the wrist bone and the clavicle, MRIs of the knee, Teeth CBCTs, DNA methylation data, and measurements of the third molar. The first four types of data (X-rays of two regions, MRIs and CBCTs) would correspond to image data, whereas the other two would be considered as tabular data. Besides, in this case, the image data and the DNA methylation data may be used to obtain age estimates from trainable methods (1'), and the measurements of the third molar would be introduced into an age estimating equation corresponding to a non-trainable method (1").

Once the estimation methods (1) are selected, the trainable methods (1'), each identified with a model typically involving machine learning (like, for instance, random forests, decision trees linear regressions, gradient boosting, or support vector machines for tabular data) or deep learning (such as neural networks, convolutional neural networks or vision transformers for image data) techniques, are trained separately. For this purpose, a training data set (3) is provided, said training data set (3) comprising all the types of data that correspond to the trainable models (1').

Each model (1') is thus trained with the type of data associated to said model (1') such that it provides an estimate of the age of a subject based on the corresponding type of training data (3). For instance, and continuing with the above example, a model (1') would be trained with all the available radiographies of the wrist bone, which will include X-rays of that anatomic region from a plurality of different training subjects. Another model (1') would be trained with all the available radiographies of the clavicle, which may belong to different training subjects than those of the wrist bone, and so on until all the trainable models (1') are trained and a set of trained models (4) is obtained. This step may be performed in parallel for all the models (1'). In this way, each model (1') is trained independently with all the available data associated with said model (1'), so that the age estimation obtained with each model (1') is optimized according to the available training data (3) in each case. Moreover, it is desirable to employ a training data set (3) comprising data from different population groups, i.e., including training subjects from different socio-economic backgrounds, from different ethnic groups, from different countries of origin, etc.

At this stage, one or more ensembles (5) are defined by selecting a subset (6) of the trained models (4) to be included in each of them. The model selection and the definition of the number of ensembles (5) may be carried out in different ways, depending on the final purpose of the application of the method. For instance, a generic high accuracy may be sought. In this case, an ensemble (5) would be constructed in such a way that is comprises the models associated with a training data subset (7) comprising training data (3) from the plurality of training subjects which share the same data types. Following on the employed example, if the training data set (3) comprises X-rays of the clavicle, MRIs and DNA methylation data of all the training subjects (or of a majority of them) and lacks X-rays of the wrist bone, teeth CBCTs and measurements of the third molar of some of the training subjects, an ensemble (5) will be defined comprising the models trained with X-rays of the clavicle, MRIs and DNA methylation data.

Another possibility is to define N ensembles (5), where N is the number of all possible combinations of one or more trained models (4), and wherein each of the N ensembles (5) comprises a corresponding different combination of one or more trained models (4). This covers a more generic scenario in which all combinations are probed, so that it is ensured that all possible age estimations are carried out.

Other ways of defining the ensemble/s (5) may be also used, depending, as mentioned, on the final application of the method. If the method is to be used only to determine if a person is a minor, the definition of the ensemble/s (5) may be performed in such a way that it comprises the subset (6) of models (4) which provide better accuracies for such task. If, on the other hand, the purpose of the use of the method is to determine the age of a subject in any range, the definition of the ensemble/s (5) may be tailored to such aim.

As mentioned, estimating the age of a subject may be aimed at very different purposes: determining if said subject is a minor, determining whether said subject is above the retirement age, determining the age after the time of death of some skeletal remains, etc. These problematics, although related, may differ greatly in terms of which estimation methods (1), anatomic regions, types of data, etc., may be used to obtain the most accurate results. Thus, a different set of estimation methods (1), corresponding to different types of data related to different anatomic regions are to be selected when carrying out the method of the invention to ensure the highest possible accuracy. This affects also to the definition of the ensemble/s (5), since the subset (6) of models (4) they comprise will be chosen, as mentioned, depending on the particular application of the method. For instance, Tables 1 and 2 show the main anatomic regions and the main estimation methods (1) for which they are useful in determining the age of subjects within different age ranges for deceased and living persons, respectively. This gives an idea of which estimation methods (1) would be included in each case both in the overall method and in the one or more ensembles (5).

**Table 1.** Main anatomic regions and main methods in determining the age of subjects within different age ranges for deceased persons.

| Age range | Method & Anatomic region |
| --- | --- |
| Fetal | Bone dimensions and assessment of the appearance and fusion of major centers of ossification. |
| Infant and juvenile remains (from birth to 18 years) | Dental development and eruption, bone fusion (ossification) or skeletal maturation and size. |

(continued)

| Age range | Method & Anatomic region |
|---|---|
| Establishing whether the subject is under or over 25-30 years | Degree of epiphyseal fusion of long bones, the iliac crest, the clavicle and the sacrum. |
| Subjects under 40 years | Pubic symphysis: Suchey-Brooks/ Hartnett methods + comparison of the morphology of the pubic symphysis with written descriptions and reference casts. Sternal end of ribs (right fourth rib mainly). |
| Older subjects | Auricular surface. |
| Adult remains in general | Acetabulum.<br>Suture closure.<br>Pathology and cartilage ossification: Osteoarthritis or degenerative joint disease, plus diseases such as diffuse idiopathic skeletal hyperostosis (DISH), hyperostosis frontalis interna or osteoporosis may be able to support the age estimation of an individual, for example with regard to a young vs an old adult, as well as the degree of ossification of some cartilages, such as the thyroid and cricoid.<br>Dental cementum annulations and dental root translucency. |

**Table 2.** Main anatomic regions and main methods in determining the age of subjects within different age ranges for living persons.

| Age range | Method & Anatomic region |
|---|---|
| Legal age of 18 years | Dental examination (eruption and X-rays), especially third molar. Assessment of the left hand and wrist. If the bones of the hand and wrist are fused, then the clavicles should be examined by conventional radiography or computed tomography. Radiographs or CT scans from other regions of the body should be used if available from previous medical history. |
| Legal age of 18 years | Dental examination (eruption and X-rays), especially second molar. Assessment of the left hand and wrist. |
| Legal age of 18 years | Dental examination (eruption and X-rays). Assessment of the left hand and wrist. |
| Adult | Any method used in age-at-death estimation can be employed on the living if images are available. |

Once the ensemble/s (5) is/are defined, the next step of the method corresponds to the training of said ensemble/s (5). It is to be noted that, unlike in all the procedures disclosed in the art, the subset (6) of models (4) belonging to the ensemble/s (5) have been pretrained independently with the whole corresponding training data set (3).

The training data set (3) employed in the training on the ensemble/s (5) may depend on the construction of the ensemble/s (5) itself/themselves. For any combination of models comprised by an ensemble (5), only the corresponding data associated with the subjects which share the same data types will be used to train the ensemble (5). This implies that, although a trained model (4) may have been previously trained with a large number of different subjects, the ensemble (5) comprising said trained model (4) may be trained with a training data subset (7) of the data associated to said number of subjects. In this way, the ensemble (5) learns an aggregation of the features extracted by the subset (6) of models (4) it comprises (or directly from the estimates they make) and learns how to combine efficiently the different trained models (4) and the correlation between the corresponding data types and the estimated ages. This translates into higher accuracies in the estimations and into higher robustness.

In order to clarify the different data used for each of the steps of the method, Table 3 is presented. There, the correlation between subjects and types of data is shown, indicating which types of training data (3) are available for each subject.

**Table 3.** Data type distribution among training subjects.

| | X-ray wrist | X-ray clavicle | MRI | CBCT | DNA methylation | Third molar measurement |
|---|---|---|---|---|---|---|
| Subject 1 | x | x | x | x | x | x |

(continued)

|  | X-ray wrist | X-ray clavicle | MRI | CBCT | DNA methylation | Third molar measurement |
|---|---|---|---|---|---|---|
| Subject 2 | x |  | x |  | x |  |
| Subject 3 | x | x |  |  | x | x |
| Subject 4 | x |  | x |  |  |  |
| Subject 5 | x | x |  | x | x | x |

In view of Table 3, five models (1') will be trained, each corresponding to one of the first five columns of the table (the sixth column corresponds to a non-trainable method). The first model (1'), corresponding to X-rays of the wrist, will be trained with data from five subjects. The second model (1'), corresponding to X-rays of the clavicle, will be trained with data from three subjects, and so on.

Regarding the training of the ensemble/s (5), if, as an example, the subset (6) of models (4) corresponding to the X-rays of the wrist and to the MRIs are the only ones selected to be part of an ensemble (5), only the X-rays of the wrist and the MRIs of subjects 1, 2 and 4 will be used to train the ensemble (5). In this way, and as previously mentioned, the ensemble (5) learns, by training, an efficient aggregation of the results obtained by the subset (6) of models (4) it comprises. Also, and in a more general scenario, the training data used to train the ensemble may be different from the training data used to train each of the independent models. For instance, a dataset of N X-rays of the wrist corresponding to N subjects may be used to train the model aimed to estimate the age of a subject from X-rays of the wrist and the ensemble comprising said model may be trained with a different dataset comprising different types of data from M subjects different from the N subjects. In this case, the learning of the efficient aggregation of the results obtained by the subset (6) of models (4) comprised by the ensemble is even more relevant.

As to the specific structure of the ensemble/s (5), in a preferred embodiment of the invention, it is formed by:

- a trained artificial neural network (ANN), comprising internal weights with a determined value, per each of the trained models (4) trained with image training data (3). This ANN may correspond to a convolutional neural network (CNN) or to a Vision Transformer (ViT), among other possibilities;
- a trained ANN, comprising internal weights with a determined value, per each of the trained models (4) trained with tabular training data (3); and
- an overall network of trained ANNs, comprising network weights, per each defined ensemble (5).

Within this configuration, each of the trained ANNs comprised by each overall network corresponds to a branch of said overall network. Furthermore, zero or more final layers of each trained ANN may be removed, in such a way that k features, with k > 0 being the number of neurons in the final layer of each of said trained ANNs, are outputted from each trained ANN. The case in which zero final layers are removed corresponds to the case in which the output of the overall network is directly the estimate of the age obtained by the ensemble (5). If one or more layers are removed, a collection of features which may be interesting from both the computational and the age estimating point of view is outputted instead.

On the other hand, each overall network comprises an initial fully connected layer of k*x neurons, with x being the number of models comprised by the corresponding ensemble (5), that is inserted at the end of the branches of said overall network and is followed by a nonlinear function. Then, this fully connected layer is followed by 0 or more intermediate layers and, finally, by a final layer comprising a single neuron with a linear activation function.

The training of the ensemble/s (5) structured according to the described setup is carried out by performing the following steps:

1. For each branch, an initial intermediate set of features comprising an estimation of the age of a subject is obtained by using the corresponding determined values of its internal weights. This step is only possible since the subset of models (6) comprised by the ensemble/s (5) have already been trained independently, so each of them is optimized for estimating the age of a subject according to the available training data (3).

2. Then, each initial intermediate set of features enters in the initial fully connected layer, and an output is obtained.

3. The previous output is delivered to the next intermediate layer, obtaining a subsequent output, which is delivered to the next intermediate layer and so on with all intermediate layers until a final intermediate output is obtained.

4. The final intermediate output is delivered to the final layer and a combined estimate of the age of a subject corresponding to the estimate of the age of a subject of the corresponding ensemble (5) is obtained.

5. By comparing said combined estimate with the actual age values comprised by the training data (3), the internal weights and the network weights are updated.

6. finally, the training process is repeated iteratively until the corresponding ensemble (5) is trained, and a trained ensemble (8) is obtained.

In another embodiment of the invention, one or more (even all) of the trained models (4) trained with tabular training data (3) are not introduced in the ensemble/s (5) as an ANN, since they may be incompatible with the implementation of said network. For instance, if one of these trained models (4) corresponds to a decision tree, this may not be included as an ANN. Instead, after the ensemble/s (5) are trained, an estimate of the age of a subject is obtained with each of said ensembles (5) and with each of the trained models (4) trained with tabular training data (3) that have not been included in the ensemble/s (5) as ANNs. All these estimates are then concatenated into an age feature vector which is used as training data for a machine or deep learning model (random forest, support vector machine, lineal regression, deep random neural network, or other) adapted to provide a combined estimate of the age of the subject.

Once the separate models (1') and the ensemble/s (5) are trained, input data (2) from a test subject is delivered to the ensemble/s (5), to the trained models (4) not comprised by the ensemble/s, and to the non-trainable methods (1"), such that an estimate of the age (9) of the test subject is obtained from the ensemble/s (5), the age (9') from the models not comprised by the ensemble/s (5), and the age (9") from the non-trainable methods (1"). Finally, all these estimates (9, 9', 9") are aggregated by means of one or more aggregation functions (10), obtaining a final estimate (11) of the age of the test subject. The selected aggregation functions (10) may comprise statistical functions or functions associated to fuzzy set theory.

In an embodiment of the invention, before the aggregation of the estimates (9, 9', 9"), a predetermined weight might be associated to each of said estimates (9, 9', 9") obtained for the test subject and one or more of the used aggregation functions (10) may comprise said weights. An example of this corresponds to a weighted average, in which all the obtained estimations (9, 9', 9") are averaged according to their different weights, although other aggregation functions (10) may be equivalently used. For establishing the values of said weights, data about the accuracy of each estimation method (1) (both in the whole age range or in the specific age range to which the age estimated by said method belongs) and/or the performance of each estimation method (1) and of the ensemble/s (5) (both in the whole age range or in the specific age range to which the age estimated by said method belongs) may be used.

The described embodiment provides a method for accurately estimating the age of a living or decease person (at the time of death). Nevertheless, the performance of said method might be improved by considering different data or "metadata" of the subjects, not directly related to the estimation of their age, but relevant when assessing the accuracy of the method.

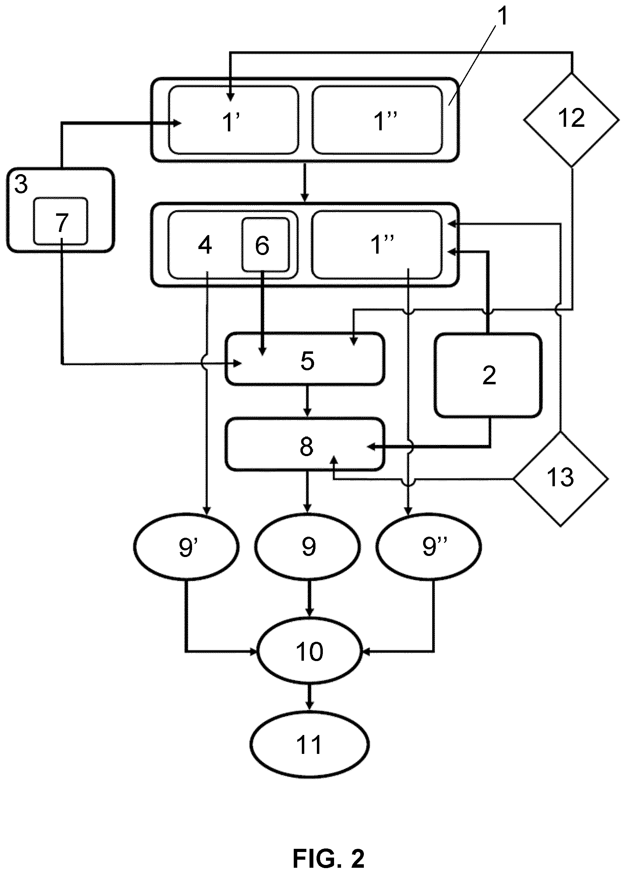

Figure 2 shows an embodiment in which these types of metadata are included in order to improve the results obtained. Among the different types of metadata, the following may be included: legal, social, medical, genetic, family, and developmental data. For example, the following categories may be key to determine accurately the age of a subject: referred date of birth, racial group, country of origin, sex, socioeconomic status, (personal and family) pathologic and/or injury history, history of tooth replacement and/or nutrition in infancy and recent months (height, weight, build).

The metadata can be used both for improving the performance of each of the independent trainable models (1') and/or for improving the performance of the ensemble/s (5). A set of training metadata (12) may be delivered to the trainable models (1') and to the ensemble/s (5) so that their corresponding trainings are optimized, i.e., so that said models/ensemble/s (1', 5) learn how to tune their age estimates according to the provided training metadata (12). This will reduce the errors when obtaining the final age estimate (11) of a subject, for which corresponding input metadata (13) have been delivered to the different trained models (4) and ensemble/s (5) of the method.

More specifically, regarding the ensemble/s (5), the training metadata (12) may be introduced in the training process by including an additional branch corresponding to an ANN which receives input metadata (13) into the overall network of ANNs. Said ANN is a fully connected ANN in which the first layer has m neurons, with m being the number of training metadata (12) types, and said additional branch is followed by zero or more fully connected layers, where each fully connected layer adds a nonlinear activation function. Another possibility is introducing the training metadata (12) as tabular data concatenated with the trained models' (4) and ensemble/s' (5) estimates into an age feature vector which is then used as training data for a machine or deep learning model adapted to provide a combined estimate of the age of the subject.

In principle, this process would be applicable to the general performance of the method, meaning that, instead of constructing one or more ensembles (5) per se, an age feature vector containing the estimates of all the selected estimation methods (1) may be constructed and inputted into a machine learning model. This represents an alternative to the method described in the embodiments above.

Regarding this alternative, a further embodiment corresponds to the case in which the machine learning model used for obtaining the estimates, and to which the age feature vector is inputted, is a Deep Random Neural Network (DRNN). In this scenario, instead of defining and training the ensemble/s (5) before the delivery of input data (2) it/they is/are defined and trained afterwards, using only the subset of training data (3) and corresponding models for which the test individual whose age is being estimated has data. Therefore, a model is defined and trained each time test subject input data (2) is received. This saves considerable amounts of computation time in terms of training, since these models have very reduced training times, so their use is well motivated as this reduction in training time offsets the time it takes for the model to produce the corresponding age estimate. The use of these models also implies memory savings, since no trained models or ensembles have to be stored for posterior uses.

Finally, the issue relating to possible missing values is addressed. In some cases, once the models (1') and the ensemble/s (5) are trained, the input data (2) of the test subject may not comprise all the types of data that have been used for the corresponding trainings.

This problem may be solved in several different ways. The first one, corresponding to an embodiment of the invention, is training the models (1') and ensemble/s (5) with training data (3) where one or more values of a training data type are replaced by a black image if they correspond to image training data (3) or by an array of zeroes if they correspond to tabular training data (3). Then, the ensemble/s (5) comprising the models corresponding to said missing value/s is/are trained for each possible combination of training data types and "simulated" missing values, i.e., training data which have been replaced by black images or arrays of zeroes. The same can be done systematically so that, for every type of data, several pieces of existing training data (3) are removed and replaced as explained above, i.e., as if they were missing values. Thus, the models (1') and ensemble/s (5) learn how to treat these missing values when encountering them in the input data (2).

Another possibility to deal with missing values, both in the case in which either a type of training data (3), is missing or in the case in which a component of the age feature vector is missing, is to rely upon standard imputing methods known in the art, like k-Nearest Neighbors imputers.

An example of the experimental application of the method of the invention is now presented in order to emphasize its accuracy and efficiency. This application relates to the problem of estimating the age of a subject in order to discern if said subject is above or below 18 years old. To do this, an X-ray of the hand, an orthopantomography (panoramic X-ray of the teeth), a CT scan of the clavicle, an image of the face and DNA methylation data are used.

All the used types of data can be used to train trainable models (1'), so a set of five trainable models (1') is provided. No non-trainable models (1") are used in this example, so the set of trainable models (1') corresponds to the total set of estimation methods (1) used.

The chosen trainable models (1') and the corresponding training data (3) used for training each of them separately is summarized as follows:

- A CNN for hand X-rays using a public dataset (the RSNA dataset) combined with private data and containing 3052 X-rays of individuals in the age range [14, 26]. This model has a MAE of 0.9 years in test.
- A CNN for orthopantomograhies using a dataset containing 11705 images from 16 countries and all continents, and in the age range [14, 26]. The model has a MAE of 1.1 years in test.
- A CNN for CTs of the clavicle using a dataset containing 4514 CTs from 6 countries and in the age range [14, 26]. The model has a MAE of 1.1 years in test.
- A CNN for face images using a dataset containing 14302 images of the face of individuals in the age range [14, 26]. The model has a MAE of 1.5 years in test.
- A linear regression for DNA methylation using 7 markers in a dataset composed of 4 public datasets and containing 231 individuals in the age range [14, 26]. The model has a MAE of 0.57 years in test.

Once each of the models (1') is trained with the corresponding type of training data (3), an ensemble (5) is defined so that it comprises three of the trained models (4) corresponding to the data types of CT scan of the clavicle, X-ray of the hand and orthopantomography. The ensemble (5) is then trained using a public dataset (the New Mexico Decedent Image Database) containing 886 full body CTs of individuals in the age range [14, 26]. From this data, CT scans of the clavicle, X-rays of the hand and orthopantomographies, as well as metadata (sex and socio-economic status) can be obtained for each subject belonging to the training data set. As a result, the ensemble (5) is an ANN of ANNs that contains 4 branches; three of them related to the trained models (4) comprised by the ensemble (5): CNN 1a (CT scans of the clavicle), CNN 1b (X-rays of the hand) and CNN 1c (orthopantomographies); and an ANN of two neurons in the first layer that receives metadata. The CNN branches start with the weights that have been learned during the training of each of the models (1') separately. The ensemble (5) is then fine-tuned using the data from the 886 individuals. The ensemble has a MAE of 0.5 years in test.

Finally, after obtaining the set of trained models (4) and the trained ensemble (8), an aggregation function (10) is defined as a weighted average, where the lower the MAE for a specific age range, the higher the weight of the trained model (4)/trained ensemble (8) when predicting that age. As a result, weights will depend on the age estimated by each trained model (4)/trained ensemble (8) in the way: 1/MAE.

The aggregation will be performed among the age estimations coming from the trained ensemble (9) and from each of the models not comprised by the ensemble (9'), i.e., those corresponding to face images and DNA methylation data, since in this case no non-trainable methods are used. The relevant MAEs regarding these estimates are in different age ranges:

- The defined and trained ensemble (8) has a MAE of 0.5 years in the age range [16, 17) and of 1.7 in the age range [25, 26).
- The CNN trained with face images has a MAE of 1.4 in the range [18, 19) and of 1.5 in the range [24, 25).
- The linear regression trained with DNA methylation data has a MAE of 0.55 years in the age range [17, 18).

Once the method as described above is deployed, among the different options, it may be used to discern if a test subject is above or below 18 years old, i.e., the method may be used to estimate the legal age of a test subject. The described example is particularly efficient for this problem since the chosen models correspond to anatomic regions and types of data that maximize the accuracy of the method for estimating the legal age of a living subject. For instance, if the age of a deceased person was to be estimated, other models would be selected.

With the trained models (4), the trained ensemble (8) and the aggregation function (10) defined, input data (2) of a test subject is provided. Thus, a hand X-ray, a clavicle CT, an orthopantomography and the metadata of said test subject are delivered to the ensemble, and an age estimate (9) of 16.8 years old with corresponding weight of 1/0.5 = 2 is obtained. Then, a face image of the test subject is delivered to the corresponding CNN, and an age estimate of 18.1 years old with weight of 1/1.5 = 0.71 is obtained. Finally, the DNA methylation data of the test subject is delivered to the corresponding model, and an age estimate of 17.0 years with weight of 1/0.55 = 1.82 is obtained. After the weights are normalized (dividing by 2+0.71+1.82 = 4.53) the final estimate (11) of the age of the test subject is obtained:

$$\hat{y} \ = \ 16.8 \times \frac{2}{4.53} \ + \ 18.1 \times \frac{0.71}{4.53} \ + \ 17 \times \frac{1.82}{4.53} = 17.08 \ \text{years.}$$

In another case in which, for instance, the data corresponding to the DNA methylation data was not available, the weights comprised by the aggregation function (10) would be distributed amongst the two other methods. The trained ensemble (8) would then estimate an age of 25.4 years old (weight of 1/1.7 = 0.59), and the CNN corresponding to the face images would estimate an age of 24.7 years old (weight of 1/1.5 = 0.67). The weights are normalized dividing by 0.59+0.67 = 1.26 and the final estimate (11) of the age is:

$$\hat{y} = \ 25.4 \times \frac{0.59}{1.26} \ + \ 24.7 \times \frac{0.67}{1.26} = 25.03 \ \text{years.}$$

**Claims**

1. Computer implemented method for estimating the age of a living subject or the age at the time of death of a subject's corpse, the method comprising performing the following steps in any possible technical order:

   a) providing a plurality of estimation methods (1) adapted to deliver an age estimation of a subject from input data (2) of said subject;
   b) classifying the plurality of estimation methods (1) into a trainable subset comprising the trainable estimation methods (1') and a non-trainable subset comprising the non-trainable estimation methods (1");
   c) providing a training data set (3) of a plurality of training subjects, said training data set (3) being classified in a plurality of training data types for each training subject and wherein said training data set (3) comprises image and/or tabular training data (3) indicative of the age of the plurality of the training subjects;

d) training a machine or deep learning model for each trainable estimation method (1') comprised in the trainable subset, each of said trainable estimation methods (1') corresponding to a type of training data classified in step c), and obtaining a plurality of trained models (4), wherein each of the trained models (4) provides an estimate of the age of a subject based on the corresponding type of training data (3);

and **characterized in that** the method further comprises performing the following steps:

e) defining one or more trained-model ensembles (5) comprising a subset (6) of the plurality of trained models (4) obtained in step d);

f) training each trained-model ensemble (5) defined in step e) with either:

- a subset (7) of the training data (3) that correspond totally or partially to the subset (6) of the plurality of trained models (4) comprised by said ensemble (5); or
- a second training data set, different from the training data set provided in step c), comprising training data corresponding to the data types associated with the trained models (4) comprised by the trained-model ensemble (5);

and obtaining a trained trained-model ensemble (8) configured to provide an estimate of the age of a subject based on an optimized aggregation of the trained models (4) comprised by said ensemble (5);

g) delivering input data (2) of a test subject to each of the trained models (4) obtained in step d) that are not comprised in the trained-model ensemble/s (5), to each trained trained-model ensemble (8) obtained in step f) and to each of the non-trainable estimation methods (1"), and obtaining an estimate (9, 9', 9") of the age of the test subject with each of said trained models (4), with each of said trained ensembles (8) and with each of said non-trainable estimation methods (1");

h) aggregating, using one or more aggregation functions (10), the estimates (9, 9', 9") of the age of the test subject obtained in step g), obtaining a final estimate (11) of the age of the test subject; and

i) delivering the final estimate (11) of the age of the test subject.

2. Method according to the preceding claim, wherein the definition of the one or more trained-model ensembles (5) in step e) comprises:

- selecting a training data subset (7) of the training data set, where the training data subset (7) comprises training data (3) from the plurality of training subjects which share the same data types, and defining a trained-model ensemble (5) comprising a subset (6) of the plurality of trained models (4) obtained in step d) corresponding to the training data types comprised in the training data subset (7); or
- defining N ensembles (5), where N is the number of all possible combinations of one or more trained models (4), and wherein each of the N ensembles (5) comprises a corresponding different combination of one or more trained models (4).

3. Method according to any of the preceding claims, wherein in the training data subset (7) one or more values of a training data type are replaced by:

- a black image if the training data type corresponds to image training data (3); or
- an array of zeroes if the training data type corresponds to tabular training data (3); and wherein the ensemble (5) comprising the trained models (4) corresponding to said training data types is trained for each possible combination of training data types and replaced training data types.

4. Method according to the preceding claim, wherein in the input data (2) one or more values of an input data type are missing for a test subject, and said missing value/s are replaced by:

- a black image if the input data type corresponds to image training data (3); or
- an array of zeroes if the input data type corresponds to tabular training data (3).

5. Method according to any of the preceding claims, wherein the training data (3) comprise 2D and/or 3D image data of a plurality of anatomic regions, face and/or one or more bones and/or medical image data comprising data obtained from a plurality of medical image acquisition devices and, optionally:

- macroscopic observations of the morphology of one or more anatomic regions;
- measurements performed on dry bones, teeth, and/or medical images of bones and teeth; and/or
- DNA methylation data.

6. Method according to any of the preceding claims, wherein before step h), the following step is carried out:

g') associating a predetermined weight to each estimate (9, 9', 9") obtained in step g);
and wherein one or more of the aggregation functions (10) used in step h) comprise said weights.

7. Method according to the preceding claim, wherein one or more of the estimates (9, 9', 9") obtained in step g) is missing and wherein

- no weights are associated to the missing estimate/s; and
- the weights associated to the non-missing estimate/s are adjusted proportionally so that they add up to one.

8. Method according to the preceding claim, wherein the determination of the value of at least one of the weights is based on:

- data about the accuracy of each estimation method (1) when estimating the age of a subject;
- data about the accuracy of each estimation method (1) when estimating the age of a subject in a specific age range to which the age estimated by each estimation method (1) belongs;
- the performance of each estimation method (1) and of the ensemble (5); or
- the performance of each estimation method (1) and of the ensemble (5) in a specific age range to which the age estimated by each estimation method (1) and by the ensemble (5) belong.

9. Method according to any of the preceding claims, wherein:

- each of the models trained in step d) with image training data (3) comprises a trained artificial neural network (ANN) comprising, in turn, internal weights with a determined value;
- each ensemble (5) defined in step e) comprises an overall network of trained ANNs comprising, in turn, network weights;
- each of the trained ANNs comprised by each overall network corresponds to a branch of said overall network;
- zero or more final layers of each trained ANN comprised by each overall network are removed, in such a way that k features, with k > 0 being the number of neurons in the final layer of each of said trained ANNs, are outputted from each trained ANN;
- each overall network comprises an initial fully connected layer of k*x neurons, with x being the number of models comprised by the corresponding ensemble (5), that is inserted at the end of the branches of said overall network and is followed by a nonlinear function, 0 or more intermediate layers and a final layer comprising a single neuron with a linear activation function;

and wherein the training of each ensemble (5) in step f) is carried out in the following way:

- for each branch, an initial intermediate set of features comprising an estimation of the age of a subject is obtained by using the corresponding determined values of its internal weights;
- each initial intermediate set of features enters in the initial fully connected layer, and an output is obtained;
- the previous output is delivered to the next intermediate layer, obtaining a subsequent output;
- the previous step is repeated for each intermediate layer;
- a final intermediate output is delivered to the final layer and a combined estimate of the age of a subject corresponding to the estimate of the age of a subject of the corresponding ensemble (5) is obtained;
- by comparing said combined estimate with the training data (3), the internal weights and the network weights are updated; and
- the training process is repeated iteratively until the corresponding ensemble (5) is trained.

10. Method according to the preceding claim, wherein:

- one or more of the models trained in step d) with tabular training data (3) comprises a trained ANN comprising, in turn, internal weights with a determined value and wherein each of said ANNs comprised by an ensemble correspond to a branch of said ensemble (5); and/or

- after the ensemble/s (5) are trained, an estimate of the age of a subject is obtained with each of said ensembles (5) and with each of the models trained in step d) with tabular training data that do not comprise a trained ANN, said estimates are concatenated into an age feature vector and said age feature vector is used as input to train a machine learning model adapted to provide a combined estimate of the age of a subject.

11. Method according to any of the preceding claims, further comprising, before step d), performing the step:

c') providing associated training metadata (12) of the plurality of subjects, said training metadata (12) being classified in a plurality of metadata types for each training subject;
wherein at least one of the following is performed:

- step d) further comprises employing the training metadata (12) to optimize the training of one or more of the machine learning models thus optimizing the estimate (9') of the age of a subject provided by said models;
- step f) further comprises employing the training metadata (12) to optimize the training of one or more of the ensembles (5) thus optimizing the estimate (9) of the age of a subject provided by said ensembles (5); and
- step g) further comprises delivering input metadata (13) of a test subject to one or more trained models (4) obtained in step d) and/or to one or more trained ensembles (8) obtained in step f); and

wherein the training metadata (12) and the input metadata (13) comprise at least one of the following types of data: legal, social, medical, genetic, family and developmental data.

12. Method according to claim 11 and claims 9 or 10, wherein:

- the overall network of ANNs comprises an additional branch corresponding to an ANN trained with the training metadata (12);
- said ANN is a fully connected ANN in which the first layer has m neurons, with m being the number of metadata types; and
- said additional branch is followed by zero or more fully connected layers, where each fully connected layer adds a nonlinear activation function.

13. Method according to any of the preceding claims, wherein the input data (2) that correspond to the subset (6) of the plurality of trained models (4) comprised by the ensemble/s (5) are used as training data (3) in the training of said ensemble/s (5).

14. System comprising computing means **characterized in that** said computing means comprise hardware and/or software means adapted to perform a method according to any of claims 1-13.

15. Computer program comprising instructions which, when the program is executed by computing means, cause the computing means to carry out a method according to any of claims 1-13.

FIG. 1

**FIG. 2**

Europäisches
Patentamt
European
Patent Office
Office européen
des brevets

# EUROPEAN SEARCH REPORT

**Application Number**

EP 23 38 3188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STERN DARKO ET AL: "From individual hand bone age estimates to fully automated age estimation via learning-based information fusion", 2016 IEEE 13TH INTERNATIONAL SYMPOSIUM ON BIOMEDICAL IMAGING (ISBI), April 2016 (2016-04), pages 150-154, XP093149589, DOI: 10.1109/ISBI.2016.7493232 ISBN: 978-1-4799-2349-6 Retrieved from the Internet: URL:https://ieeexplore.ieee.org/stampPDF/getPDF.jsp?tp=&arnumber=7493232&ref=aHR0cHM6Ly9pZWVleHBsb3JlLmllZWUub3JnL2RvY3VtZW50Lzc0OTMyMzI=> | 1 | INV. G06F18/25 G06F18/27 G06N3/045 G06V10/80 G06V40/16 |
| Y | * the whole document * ----- | 1-15 | |
| Y | BOYACIOGLU DOGRU HATICE ET AL: "Age of majority assessment in Dutch individuals based on Cameriere's third molar maturity index", FORENSIC SCIENCE INTERNATIONAL, ELSEVIER B.V, AMSTERDAM, NL, vol. 282, 13 November 2017 (2017-11-13), XP085313370, ISSN: 0379-0738, DOI: 10.1016/J.FORSCIINT.2017.11.009 * the whole document * ----- -/-- | 1-15 | |

**TECHNICAL FIELDS SEARCHED (IPC)**

G06F
G06N
G06V

The present search report has been drawn up for all claims

| Place of search | Date of completion of the search | Examiner |
|---|---|---|
| The Hague | 10 April 2024 | Neubüser, Bernhard |

page 1 of 4

**EUROPEAN SEARCH REPORT**

**Application Number**

EP 23 38 3188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Kuncheva Ludmila I.: "Combining Pattern Classifiers: Methods and Algorithms, 2nd Edition; chapters 3-7" In: "Combining Pattern Classifiers: Methods and Algorithms, 2nd Edition; chapters 3-7", 9 September 2014 (2014-09-09), Wiley, XP093147203, ISBN: 978-1-118-91454-0 pages 1-382, DOI: 10.1002/9781118914564, Retrieved from the Internet: URL:https://doc.lagout.org/science/0_Compu ter%20Science/2_Algorithms/Combining%20Pat tern%20Classifiers_%20Methods%20and%20Algo rithms%20(2nd%20ed.)%20[Kuncheva%202014-09 -09].pdf> * the whole document * | 1-15 | |
| | ----- | | |
| Y | XIE JIU-CHENG ET AL: "Deep and Ordinal Ensemble Learning for Human Age Estimation From Facial Images", IEEE TRANSACTIONS ON INFORMATION FORENSICS AND SECURITY, IEEE, USA, vol. 15, 11 January 2020 (2020-01-11), pages 2361-2374, XP011770982, ISSN: 1556-6013, DOI: 10.1109/TIFS.2020.2965298 [retrieved on 2020-02-07] * the whole document * | 1-15 | TECHNICAL FIELDS SEARCHED (IPC) |
| | ----- | | |
| | -/-- | | |

The present search report has been drawn up for all claims

| Place of search | Date of completion of the search | Examiner |
|---|---|---|
| The Hague | 10 April 2024 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 38 3188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIU KUAN-HSIEN ET AL: "Age Estimation via Grouping and Decision Fusion", IEEE TRANSACTIONS ON INFORMATION FORENSICS AND SECURITY, IEEE, USA, vol. 10, no. 11, November 2015 (2015-11), pages 2408-2423, XP011668926, ISSN: 1556-6013, DOI: 10.1109/TIFS.2015.2462732 [retrieved on 2015-09-15] * the whole document *  ----- | 1-15 | |
| Y | ALIREZA KESHAVARZ CHOOBEH: "An Averaging Technique for Improving Human Age Estimation Algorithms", COMMUNICATION SYSTEMS AND NETWORK TECHNOLOGIES (CSNT), 2013 INTERNATIONAL CONFERENCE ON, IEEE, 6 April 2013 (2013-04-06), pages 868-870, XP032421221, DOI: 10.1109/CSNT.2013.187 ISBN: 978-1-4673-5603-9 * the whole document *  ----- | 1-15 | TECHNICAL FIELDS SEARCHED (IPC) |
| Y,D | PHAM CUONG VAN ET AL: "Age estimation based on 3D post-mortem computed tomography images of mandible and femur using convolutional neural networks", PLOS ONE, vol. 16, no. 5, 12 May 2021 (2021-05-12), page e0251388, XP093149842, US ISSN: 1932-6203, DOI: 10.1371/journal.pone.0251388 * the whole document *  ----- | 1-15 | |

-/--

The present search report has been drawn up for all claims

| Place of search | Date of completion of the search | Examiner |
|---|---|---|
| The Hague | 10 April 2024 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 38 3188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | STERN DARKO ET AL: "Automatic Age Estimation and Majority Age Classification From Multi-Factorial MRI Data", IEEE JOURNAL OF BIOMEDICAL AND HEALTH INFORMATICS, IEEE, PISCATAWAY, NJ, USA, vol. 23, no. 4, July 2019 (2019-07), pages 1392-1403, XP011733384, ISSN: 2168-2194, DOI: 10.1109/JBHI.2018.2869606 [retrieved on 2019-07-01] * the whole document * | 1-15 | |
| Y | VARSHAVSKY MIRI ET AL: "Accurate age prediction from blood using a small set of DNA methylation sites and a cohort-based machine learning algorithm", CELL REPORTS METHODS, vol. 3, no. 9, September 2023 (2023-09), page 100567, XP093150276, ISSN: 2667-2375, DOI: 10.1016/j.crmeth.2023.100567 Retrieved from the Internet: URL:https://www.ncbi.nlm.nih.gov/pmc/articles/PMC10545910/pdf/main.pdf> * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 10 April 2024 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 4 560 499 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. STERN, C.** Automatic Age Estimation and Majority Age Classification From Multi-Factorial MRI Data. *IEEE Journal of Biomedical and Health Informatics*, July 2019, vol. 23 (4), 1392-1403